# EUROPÄISCHE PATENTSCHRIFT

(11) **EP 0 469 582 B1**
(45) Veröffentlichungstag und Bekanntmachung des Hinweises auf die Patenterteilung: **05.04.1995**
(21) Anmeldenummer: 91112883.3
(22) Anmeldetag: 31.07.1991
(51) Int. Cl.: C02F 1/465, C02F 9/00

(54) **Verfahren und Vorrichtung zum Aufbereiten von verunreinigten Flüssigkeiten**
Process and apparatus for the treatment of polluted liquids
Procédé et dispositif pour le traitement d'eaux polluées

(30) Priorität: 01.08.1990 DE 4024424
(43) Veröffentlichungstag der Anmeldung: 05.02.1992
(73) Patentinhaber: IWATECH KONRADT GmbH, D-42109 Wuppertal (DE)
(72) Erfinder: Konradt,Kai, W-5600 Wuppertal 1 (DE)
(74) Vertreter: Patentanwälte Dr. Solf & Zapf

(56) Entgegenhaltungen:
- EP-A- 0 402 737
- CH-A- 519 444
- DE-A- 2 627 964
- FR-A- 2 292 670
- FR-A- 2 382 941

## Beschreibung

Die Erfindung betrifft ein Verfahren zum Aufbereiten von verunreinigten Flüssigkeiten, insbesondere von Schadstoffe, wie Schwermetalle, Öle, Fette, Kohlenwasserstoffe und dergleichen, enthaltendem Abwasser, wobei durch eine Elektrolysebehandlung in der Flüssigkeit Gasbläschen erzeugt und an diesen anhaftende und sich dadurch an der Flüssigkeitsoberfläche sammelnde Schadstoff-Teilchen abgeschöpft werden.

Ferner betrifft die Erfindung auch eine Vorrichtung zum Durchführen dieses Verfahrens, mit einem Behälter für die Flüssigkeit sowie einer von der Flüssigkeit durchströmten Elektrolyseeinrichtung mit einer Anoden-/Kathoden-Anordnung, wobei die Elektrolyseeinrichtung derart innerhalb des Behälters angeordnet ist, daß die durch eine Zulauföffnung einströmende Flüssigkeit die Elektrolyseeinrichtung vertikal von unten nach oben durchströmt.

Aus der DE-OS 25 52 486 sind ein Verfahren und eine Vorrichtung bekannt, womit vor allem Öl enthaltendes Wasser gereinigt werden soll. Dabei wird die zu reinigende Flüssigkeit strömend zwischen mit verhältnismäßig geringem Abstand oberhalb des Flüssigkeitsspiegels, von dem die Schmutzflocken abgeschöpft werden, angeordnete Elektroden geleitet. Dies bedeutet, daß hier die zu reinigende Flüssigkeit "frei" zwischen Anode und Kathode einer außerhalb eines Auffangbehälters und der hierin aufgefangenen Flüssigkeit angeordneten Elektrolyseeinrichtung strömt, und zwar in horizontaler Richtung oder vertikal von oben nach unten. Nachfolgend tropfen dann Wasser und an Gasbläschen haftende Schadstoff-Flocken von der Kathode nach unten in den Auffangbehälter, wobei die Flocken auf der Flüssigkeitsoberfläche bleiben sollen, damit sie z.B. mittels einer Pumpe abgepumpt werden können. Dabei ist aber von Nachteil, daß durch das Heruntertropfen des Wassers und der Schadstoffe sicherlich eine erneute Vermischung und Verwirbelung erfolgt, so daß insgesamt gesehen nur eine unzureichende Trennung der Schadstoffe von der Flüssigkeit erreicht wird. Bei der bevorzugten Anwendung zum Reinigen von ölhaltigem Abwasser kann das so aufbereitete Wasser daher wohl nicht unmittelbar in einen Abwasserkanal eingeleitet werden.

Zudem fallen heute - beispielsweise im Bereich von Kfz-Schrottplätzen und in sonstigen Industrieanlagen - in zunehmendem Maße auch solche Abwässer an, die nicht nur Öle und Fette, sondern auch bestimmte Schwermetalle und Kohlenwasserstoffe, insbesondere PAK (polyzyklische, aromatische Kohlenwasserstoffe) und PCB (polychlorierte Biphenyle), enthalten, die zumindest im Verdacht stehen, krebserregende Wirkungen zu besitzen. Bei derartigem Abwasser müssen bestimmte Grenzwerte eingehalten werden, um das gereinigte Wasser unmittelbar in die "normale" Abwasser-Kanalisation einleiten zu dürfen. Dies ist bislang nur sehr schwer und allenfalls mit sehr hohem Aufwand erreichbar.

Das Dokument DE-A-26 27 964 behandelt ein Verfahren und eine Vorrichtung zum Reinigen ausschließlich von solchen wässrigen Flüssigkeiten, die "durch ein elektrisches Feld ausflockbare Stoffe enthalten". Im einzelnen offenbart dieses Dokument ein Verfahren und eine Vorrichtung zur Elektroflotation, wobei die Flüssigkeit in einer lotrechten Flüssigkeitssäule in lotrechter Richtung in Strömung gehalten und der Schlamm am oberen Ende der Flüssigkeitssäule abgezogen wird. Dabei soll die Flüssigkeit aber mindestens einmal, insbesondere mehrmals, ihre lotrechte Richtung umkehren, und die in lotrechter Richtung entgegengesetzten Strömungen der Flüssigkeit werden dann über einen Höhenbereich kleiner als die Höhe der Flüssigkeitssäule, aber größer als der dem elektrischen Feld unterworfenen Säulenabschnitt, getrennt gehalten, wobei die Flüssigkeit dem elektrischen Feld jeweils nur in der unteren Hälfte, insbesondere nur im unteren Viertel der Flüssigkeitssäule unterworfen wird.

Die FR-A-2 382 941 (bzw. die dieser entsprechende Veröffentlichung DE-A-28 10 090) beschäftigt sich ausschließlich mit der Trennung von Festteilchen aus wässrigen Flüssigkeiten mittels Elektroflotation. Aus der Flüssigkeit können demnach offensichtlich nur solche Stoffe entfernt werden, die bereits als Partikel (Flocken) vorhanden sind; eine Abscheidung von gelösten Stoffen, wie Schwermetallen und Kohlenwasserstoffen, ist in dieser Druckschrift nicht angesprochen. Bei der Elektrolysebehandlung wird die Flüssigkeit nur zum Teil in eine vertikale, von unten nach oben verlaufende Strömung versetzt, denn unterhalb der Elektrolyseeinrichtung (Anoden, Kathoden) ist eine Kammer gebildet, die zusätzlich zu einer oberen Öffnung, in deren Bereich die Elektroden angeordnet sind, auch einen unteren Auslaß aufweist. Zumindest ein Teil der Flüssigkeit strömt folglich nicht durch die Elektrolyseeinrichtung hindurch, sondern unterhalb von dieser in horizontaler Richtung unmittelbar zu einem Auslaß. Dies zeigt deutlich, daß durch die Elektrolyse ausschließlich Gasbläschen erzeugt werden sollen (sog. "Flächenelektrolyse"), mit denen die Festteilchen an die Oberfläche transportiert und von dort abgeschöpft werden sollen.

Das Dokument CH-A-519 444 (bzw. DE-A, B, C 21 25 741) beschreibt eine Vorrichtung gemäß dem Oberbegriff des Anspruchs 10 und damit an sich auch eine Elektrolysebehandlung, bei der die Flüssigkeit für die Dauer der Elektrolysebehandlung in eine kontinuierliche, vertikal von unten nach oben in Auftriebsrichtung der Gasbläschen verlaufende Strömung versetzt wird.

Der vorliegenden Erfindung liegt die Aufgabe zugrunde, ein Verfahren zum Aufbereiten von Flüssigkeiten, insbesondere von Abwasser, zu entwickeln, mit dem auf einfache und wirtschaftliche Weise eine besonders wirkungsvolle und effektive Aufbereitung der verunreinigten Flüssigkeit auch hinsichtlich einer Abscheidung von Schwermetallen und Kohlenwasserstoff-Verbindungen möglich ist. Ferner soll auch eine Vorrichtung zum Durchführen des Verfahrens geschaffen werden, die sich durch einfachen Aufbau sowie günstige Herstellungs- und Betriebskosten auszeichnen soll.

Erfindungsgemäß wird dies einerseits durch das im Anspruch 1 definierte Verfahren bzw. andererseits durch die im Anspruch 10 gekennzeichnete Vorrichtung erreicht. Vorteilhafte Weiterbildungen der Erfindung sind in den jeweils abhängigen Ansprüchen enthalten.

Erfindungsgemäß wird somit die Flüssigkeit - in an sich bekannter Weise - für die Dauer der Elektrolysebehandlung in eine kontinuierliche, vertikal von unten nach oben verlaufende Strömung versetzt. Bei dem erfindungsgemäßen Verfahren, bei dem es sich um ein sog. "Elektro-Flotationsverfahren" handelt, wird demnach die Elektrolysebehandlung durchgeführt, während die Flüssigkeit in Auftriebsrichtung der elektrolytisch erzeugten Gasbläschen und der sich an diesen anlagernden Schadstoff-Teilchen (Flocken oder "Flotat") strömt, so daß die Schadstoffe einerseits von dem Auftrieb der Gasbläschen, andererseits aber auch von der Strömung der Flüssigkeit nach oben mitgenommen werden. Dies bedeutet, daß der durch die Gasbläschen erzeugte Auftrieb der Schadstoff-Teilchen vorteilhafterweise durch die Flüssigkeitsströmung unterstützt wird. Die Strömung in Auftriebsrichtung ist dabei erfindungsgemäß derart langsam und praktisch homogen, daß Verwirbelungen vermieden werden. Dadurch wird eine sehr gute und effektive Trennung der Schadstoffe von der Flüssigkeit erreicht, indem sich diese praktisch zu 100% an der Flüssigkeitsoberfläche ansammeln können. Dabei hat sich zudem gezeigt, daß die in Auftriebsrichtung durchgeführte Elektrolysebehandlung auch zu einer Vergrößerung der Schadstoff-Teilchen führen kann, was die Bildung einer abschöpfbaren Schadstoff-Schwimmschicht begünstigt. Das erfindungsgemäße Verfahren zeichnet sich durch eine hohe Effektivität aus.

In Kombination mit diesem Verfahrensschritt der Elektrolysebehandlung ist erfindungsgemäß vorgesehen, daß die Flüssigkeit nach der Elektrolysebehandlung für eine Flotationsphase in eine kontinuierliche, horizontale Strömung versetzt wird. Während dieser Flotationsphase ist die Strömungsgeschwindigkeit der Flüssigkeit ebenfalls derart gering, daß eine im wesentlichen homogene, verwirbelungsfreie Strömung vorhanden ist. Die jeweilige Strömungsgeschwindigkeit sowohl in der vertikalen als auch in der horizontalen Richtung kann dabei sehr einfach durch Einstellen der Zulaufmenge der Flüssigkeit in Anpassung an die jeweils vorhandenen Strömungsquerschnitte verändert werden. Die Flotationsphase dauert vorteilhafterweise derart lang, daß praktisch alle SchadstoffTeilchen sich oben an der Flüssigkeitsoberfläche ansammeln können. Dies ist nach etwa einer halben Stunde der Fall. Durch die horizontale Strömung werden die Schadstoffe bzw. die von diesen gebildete Schwimmschicht zudem horizontal mitgenommen und so zu einer Abschöpfeinrichtung bewegt, wo sie sehr vorsichtig und verwirbelungsfrei abgeschöpft, d.h. mit einem sehr langsam in horizontaler Richtung bewegten Abstreifer von der Flüssigkeitsoberfläche "abgestreift" werden.

Der so erhaltene Schadstoff-Schlamm wird nachfolgend insbesondere drucklos entwässert, d.h. in einen Filterbehälter eingefüllt, so daß das noch enthaltene Wasser nach unten austropfen kann. Die drucklose Entwässerung ist gegenüber einer Druckentwässerung von Vorteil, weil hierdurch jegliche Schadstoffe, wie insbesondere Öle, zurückgehalten werden. Durch die Entwässerung entsteht eine stichfeste Masse (sogenannter "Schlammkuchen"), die nach einer weiteren Trocknungszeit fast vollständig austrocknet und dann einer geeigneten Entsorgung, insbesondere einer Sondermüll-Verbrennung, zugeführt werden kann. Das gereinigte Wasser kann vorteilhafterweise unmittelbar in die übliche Abwasser-Kanalisation eingeleitet, aber - wegen der guten Reinigung - durchaus sogar auch wiederverwendet werden, so beispielsweise zu Reinigungs- und/oder Kühlzwecken, z.B. zur Straßenreinigung, Toilettenspülung und dergleichen. Demgegenüber wird das aus dem Schadstoff-Schlamm abgetropfte Wasser vorzugsweise erneut der Elektrolysebehandlung zugeführt.

Es ist ein weiteres Merkmal der Erfindung, daß die zu reinigende Flüssigkeit vor der Elektrolysebehandlung einer chemischen Behandlung zum Ausfällen von Schadstoffen unterzogen wird. Hierzu wird die Flüssigkeit vorzugsweise zunächst durch Zugabe einer Säure einer pH-Wert-Absenkung und anschließend durch Zugabe einer Lauge einer pH-Wert-Anhebung unterzogen oder aber umgekehrt. Insbesondere wird der pH-Wert auf ca. 3 abgesenkt und dann wieder auf ca. 7 (neutral) angehoben. Diese chemische Behandlung führt zu einer Emulsionsspaltung, d.h. zum "Aufbrechen" der Flüssigkeit, wodurch insbesondere Schwermetalle ausgefällt werden. Die hierdurch entstehenden Teilchen können nachfolgend sehr effektiv durch die erfindungsgemäße Elektrolysebehandlung abgeschieden werden. Es hat sich gezeigt, daß gerade durch die erfindungsgemäße Kombination der Elektrolysebehandlung mit der vorausgehenden chemischen Behandlung eine derart effektive Reinigung erreicht werden kann, daß die gereinigte Flüssigkeit hinsichtlich der noch vorhandenen Restschadstoffe, und zwar insbesondere der PAK- und PCB-Anteile, weit unterhalb der gesetzlichen Grenzwerte bleibt. Dann wird zweckmäßigerweise das durch die Entwässerung erhaltene Wasser nicht nur der Elektrolysebehandlung, sondern auch der vorausgehenden chemischen Behandlung erneut zugeführt.

Hinsichtlich der erfindungsgemäßen Vorrichtung ist vorgesehen, daß der Behälter eine langgestreckte, wannenartige Form aufweist, wobei die Zulauföffnung und die Elektrolyseeinrichtung an einer Schmalseite des wannenartigen Behälters und an der gegenüberliegenden Seite eine Abschöpfeinrichtung für eine sich abscheidende Schadstoff-Schwimmschicht sowie ein Überlauf für die aufbereitete Flüssigkeit angeordnet sind. Die Elektrolyseeinrichtung befindet sich vollständig unterhalb des Niveaus der Oberfläche der in dem Behälter enthaltenen Flüssigkeit. Hierdurch strömt die kontinuierlich über die Zulauföffnung zugeführte Flüssigkeit zunächst vertikal von unten nach oben durch die Elektrolyseeinrichtung, tritt dann aus dieser aus und strömt horizontal in Richtung des Überlaufs, wodurch die abgeschiedenen Schadstoffe als Schicht zu der Abschöpfeinrichtung mitgenommen werden. Dabei ist erfindungsgemäß dem Behälter eine Einrichtung zum chemischen Ausfällen von Schadstoffen unmittelbar vorgeordnet, die aus zwei Teilbehältern besteht, wobei der erste Teilbehälter einen Zulauf für die aufzubereitende Flüssigkeit aufweist und mit dem zweiten Teilbehälter über einen Überlauf verbunden ist, und wobei der zweite Teilbehälter in seinem unteren Bereich eine vorzugsweise unmittelbar in die Zulauföffnung des Behälters und damit in die Elektrolyseeinrichtung übergehende Ablauföffnung aufweist. Bevorzugt sind der erste Teilbehälter mit einem Säure-Zulauf und der zweite Teilbehälter mit einem Lauge-Zulauf ausgestattet. Diese Zuläufe besitzen Ventile, die von einer Reguliereinrichtung betätigt werden, um in Abhängigkeit von über Sensoren erfaßten Istwerten der pH-Werte der in den beiden Teilbehältern enthaltenen Flüssigkeit den Säure- und/oder Lauge-Zulauf zum Einstellen von vorbestimmten pH-Sollwerten zu regulieren.

Anhand eines in der Zeichnung dargestellten Ausführungsbeispiels einer erfindungsgemäßen Vorrichtung soll im folgenden die Erfindung näher erläutert werden. Dabei zeigen:
- Fig. 1: eine Seitenansicht der erfindungsgemäßen Vorrichtung,
- Fig. 2: eine Draufsicht in Pfeilrichtung II gemäß Fig. 1,
- Fig. 3: einen vertikalen Längsschnitt längs der Linie III-III in Fig. 2,
- Fig. 4: eine Perspektivansicht einer bevorzugten Ausführungsform einer Entwässerungsvorrichtung,
- Fig. 5: einen vertikalen Querschnitt durch eine erfindungsgemäße Elektrolyseeinrichtung längs der Linie V-V in Fig. 2 und
- Fig. 6: eine Seitenansicht der Elektrolyseeinrichtung in Pfeilrichtung VI gemäß Fig. 5.

In den verschiedenen Figuren der Zeichnung sind gleiche bzw. gleich wirkende Teile und Komponenten stets mit den gleichen Bezugsziffern bezeichnet.

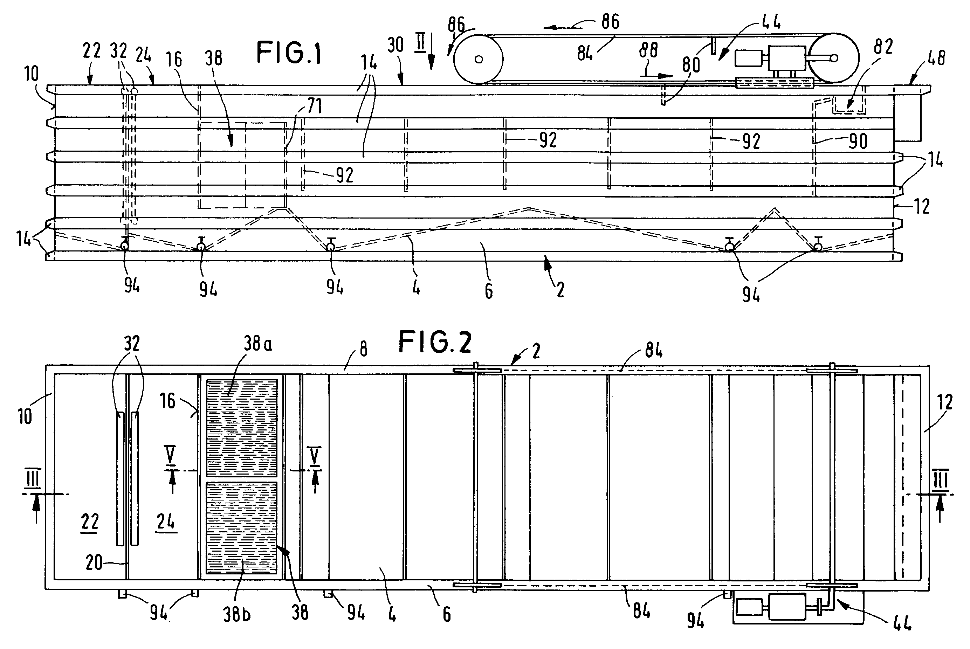

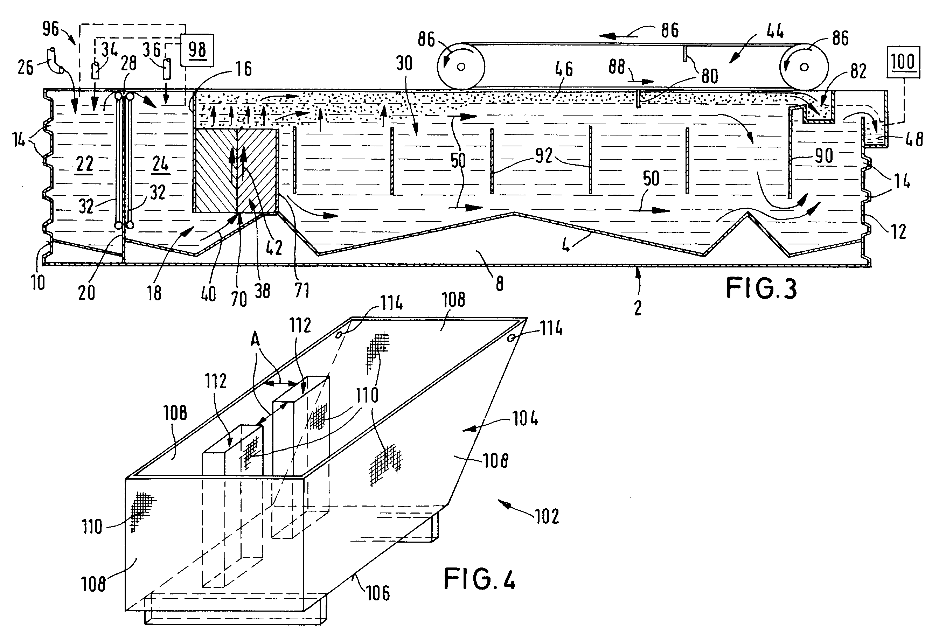

Wie den Fig. 1, 2 und 3 zu entnehmen ist, besteht eine erfindungsgemäße Vorrichtung zum Aufbereiten (Reinigen) insbesondere von Schadstoffe enthaltendem Abwasser aus einem wannenartigen, langgestreckten Behälter 2 mit einem Boden 4, zwei Längs-Seitenwänden 6 und 8 sowie zwei Stirnwänden 10 und 12. Der Behälter 2 besteht vorzugsweise aus einem faserverstärkten Kunststoff (z.B. GFK) und ist daher chemikalienbeständig (säurefest) und korrosionsfrei. Die Wände 6 bis 12 besitzen vorzugsweise Versteifungsrippen 14.
In der dargestellten, bevorzugten Ausführungsform ist in der Nähe der einen Stirnwand 10 innerhalb des Behälters 2 eine vertikale Tauchwand 16 parallel zur Stirnwand 10 angeordnet, deren untere Kante eine Öffnung 18 bildend oberhalb des Bodens 4 endet (siehe insbesondere Fig. 3). Weiterhin ist etwa im mittigen Bereich zwischen der Stirnwand 10 und der Tauchwand 16 eine zu diesen parallele Zwischenwand 20 angeordnet. Durch diese Ausgestaltung ist zwischen der Stirnwand 10 und der Zwischenwand 20 ein erster Teilbehälter 22 gebildet und zwischen der Zwischenwand 20 und der Tauchwand 16 ein zweiter Teilbehälter 24. In den ersten Teilbehälter 22 mündet ein Zulauf 26 für die aufzubereitende, verunreinigte Flüssigkeit. Die beiden Teilbehälter 22, 24 sind miteinander durch einen Überlauf 28 verbunden, der durch die gegenüber der Oberkante der Wände 6 bis 12 sowie der Oberkante der Tauchwand 16 tiefer angeordnete Oberkante der Zwischenwand 20 gebildet sein kann. Die Öffnung 18 bildet gleichzeitig einen Auslaß des zweiten Teilbehälters 24 und eine Zulauföffnung für den eigentlichen Behälter-Innenraum 30. Innerhalb jedes Teilbehälters 22, 24 ist eine insbesondere als Schlauch- oder Rohrlüfter 32 ausgebildete Mischeinrichtung angeordnet. Dies ist im Vergleich zu mechanischen, beispielsweise elektromotorisch angetriebenen Mischeinrichtungen insofern von Vorteil, als hierdurch sehr viel leichter ein Ex-Schutz gewährleistet werden kann. In den ersten Teilbehälter 22 mündet zudem ein Säure-Zulauf 34 und in den zweiten Teilbehälter 24 ein Lauge-Zulauf 36. Der Zweck dieser erfindungsgemäßen Ausgestaltung wird im folgenden noch näher erläutert werden.

Erfindungsgemäß ist nun innerhalb des Behälters 2 bzw. des Innenraums 30 eine Elektrolyseeinrichtung 38 derart angeordnet, daß diese von der in Pfeilrichtung 40 (siehe Fig. 3) durch die Zulauföffnung 18 einströmenden Flüssigkeit vertikal von unten nach oben, d.h. in Pfeilrichtung 42, durchströmt wird. Zudem ist diese Elektrolyseeinrichtung 38 vorteilhafterweise einschließlich aller erforderlichen Anschlüsse vollständig unterhalb des Niveaus der in dem Behälter 2 befindlichen Flüssigkeit angeordnet, wodurch ein besonders guter Ex-Schutz erreicht wird, indem durch Entladungen hervorgerufene Funkenbildungen vermieden werden.

Im Bereich der gegenüberliegenden Stirnwand 12 ist einerseits eine Abschöpfeinrichtung 44 für eine sich auf der Flüssigkeitsoberfläche abscheidende Schadstoff-Schwimmschicht 46 angeordnet sowie andererseits ein Überlauf 48 für die aufbereitete Flüssigkeit gebildet. Hierdurch strömt die kontinuierlich über die Zulauföffnung 18 zugeführte und aus der Elektrolyseeinrichtung 38 ausströmende Flüssigkeit nachfolgend horizontal in Richtung der Abschöpfeinrichtung 44 und des Überlaufs 48, d.h. in Richtung der in Fig. 3 eingezeichneten Pfeile 50.

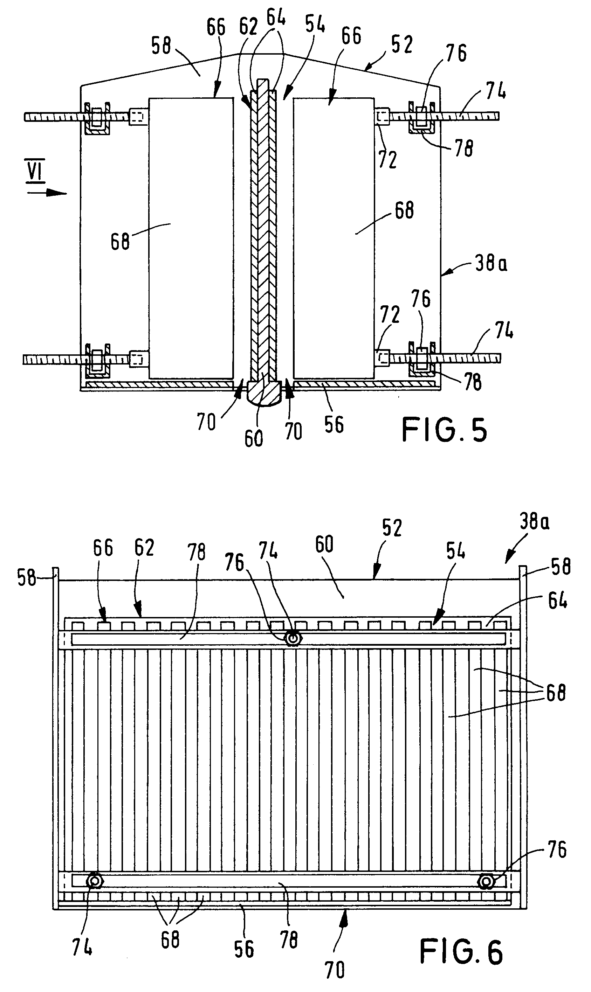

Wie sich insbesondere den Fig. 2, 5 und 6 entnehmen läßt, besteht die Elektrolyseeinrichtung 38 im bevorzugten Ausführungsbeispiel der Erfindung aus zwei lösbar in dem Behälter 2 gehalterten Elektrolyseeinheiten 38a, 38b, die nebeneinander zwischen den Seitenwänden 6 und 8 angeordnet sind und dabei an der Tauchwand 16 anliegen (siehe Fig 3). Gemäß Fig. 5 und 6 weist jede Elektrolyseeinheit 38a, b eine gehäuseartige Halterung 52 für eine Anoden-/Kathoden-Anordnung 54 auf. Die Halterung 52 besitzt einen horizontalen,im in den Behälter 2 eingesetzten Zustand (Fig. 3) etwa auf dem Niveau der unteren Kante der Tauchwand 16 liegenden Boden 56 und zwei sich von diesem vertikal erstreckende, zueinander parallele, gegenüberliegende Stirnwandungen 58, die mit ihren der Tauchwand 16 zugekehrten Kanten an dieser anliegen, so daß die Halterung 52 in dieser vertikalen Richtung durch die Tauchwand 16 im wesentlichen verschlossen ist. Zwischen den Stirnwandungen 58 erstreckt sich mittig eine vertikale Zwischenwandung 60. Diese Zwischenwandung 60 bildet eine Haltewandung für eine Kathode 62, die im bevorzugten Ausführungsbeispiel aus zwei einzelnen, auf beiden Seiten der Haltewandung 60 gehalterten Platten 64 insbesondere aus Edelstahl besteht. Auf beiden Seiten dieser Kathode 62 ist jeweils eine Anode 66 angeordnet, wobei jede Anode 66 von einer Vielzahl von zueinander parallel sowie in vertikalen, zu der Kathode 62 senkrechten Ebenen liegenden, insbesondere aus Aluminium bestehenden Platten 68 gebildet ist. Im Bereich zwischen der Kathode 62 und den Anoden 66 besitzt der Boden 56 der Halterung 52 jeweils eine schlitzförmige Eintrittsöffnung 70 für die Flüssigkeit, und in ihrem oberen Bereich ist die Halterung 52 zum Austritt der Flüssigkeit vorzugsweise vollständig offen ausgebildet. Auf der der Tauchwand 16 gegenüberliegenden Seite kann innerhalb des Behälters 2 eine weitere Wandung 71 (Fig. 3) angeordnet sein, die sich parallel zur Tauchwand 16 vom Behälter-Boden 4 bis zum oberen Abschluß der Elektrolyseeinrichtung 38 erstreckt, so daß auch in dieser vertikalen Richtung die Halterung 52 geschlossen und daher nur nach oben hin sowie unten über die Eintrittsöffnungen 70 des Bodens 56 offen ist. Die Halterung 52 ist derart in dem Behälter 2 angeordnet, daß die Zulauföffnung 18 in die Eintrittsöffnungen 70 übergeht.

Zweckmäßigerweise sind die Anoden 66 zum Verstellen des Elektrodenabstandes relativ zu der Kathode 62 verstellbar in der Halterung 52 gehaltert. Hierzu sind die Platten 68 jeder Anode 66 im oberen und unteren Bereich ihrer der Kathode 62 abgekehrten Kanten über Verbindungsstangen 72 miteinander verbunden. An diesen Verbindungsstangen 72 sind Gewindestangen 74 befestigt, die in Einstellmuttern 76 eingreifen, die ihrerseits in im Querschnitt U-förmigen Halteprofilen 78 geführt sind. Diese Halteprofile 78 erstrecken sich parallel zu der Zwischenwandung 60 zwischen den Stirnwandungen 58 der Halterung 52. Die Verstellung des Elektrodenabstandes kann manuell oder aber motorisch mittels eines nicht dargestellten Antriebsmotors erfolgen.

Die Halterung 52 besteht zweckmäßigerweise aus einem faserverstärkten Kunststoff, und auch die die Anoden 66 bzw. deren Platten 68 verstellbar halternden Teile 72, 74, 76 und 78 bestehen aus einem Isolierwerkstoff, insbesondere aus PVC.

Wie weiterhin insbesondere in Fig. 3 zu erkennen ist, weist die Abschöpfeinrichtung 44 mindestens einen oberhalb des Behälters 2 quer zur Behälter-Längserstreckung angeordneten und vertikal in die Schwimmschicht 46 sowie vorzugsweise geringfügig in die darunter angeordnete Flüssigkeit eintauchenden Abstreifer 80 auf, der insbesondere motorisch in Richtung einer dem Flüssigkeits-Überlauf 48 vorgeordneten Ablaufrinne 82 für die Schwimmschicht 46 beweglich geführt ist. In der dargestellten, bevorzugten Ausführungsform der Erfindung sind zwei derartige Abstreifer 80 an umlaufenden Antriebselementen 84, z.B. Ketten, befestigt, die derart in Richtung der in Fig. 3 eingezeichneten Pfeile 86 umlaufen, daß sich die Abstreifer 80 in ihrer unteren, in die Schwimmschicht 46 eintauchenden Lage in Pfeilrichtung 88 in Richtung der Ablaufrinne 82 bewegen. Die Schwimmschicht 46 gelangt hierdurch über eine von einer Tauchwand 90 gebildeten Überlaufkante in die Ablaufrinne 82.

Weiterhin ist der Fig. 3 zu entnehmen, daß sich im Bereich zwischen der Elektrolyseeinrichtung 38 und der Ablaufrinne 82 bzw. der Tauchwand 90 zwischen den Seitenwänden 6, 8 mehrere Querwände 92 erstrecken, die jeweils zueinander sowie zu den Stirnwänden 10, 12 parallel angeordnet sind und mit ihren oberen und unteren Kanten jeweils von der Oberkante der Seitenwände 6, 8 sowie vom Boden 4 beabstandet sind. Diese Querwände 92 dienen zur Beruhigung der innerhalb des Behälters 2 strömenden Flüssigkeit, was die Flotation, d.h. das Abscheiden der Schadstoffe, begünstigt, sowie zur mechanischen Versteifung des Behälters 2. Es ist ferner zweckmäßig, wenn der Boden 4 in mehrere Abschnitte unterteilt ist, die jeweils in unterschiedlichen Richtungen ein Gefälle zur Horizontalen aufweisen. Dabei weist der Behälter 2 jeweils an den tiefsten Stellen des Bodens 4 Ablaufventile 94 auf (Fig. 1 und 2). Diese Ausgestaltung erleichtert eine vollständige Entleerung des Behälters 2, falls diese z.B. zu Reinigungszwecken erforderlich sein sollte.

Die oben bereits beschriebenen, der Elektrolyseeinrichtung 38 insbesondere unmittelbar vorgeordneten Teilbehälter 22 und 24 sind Bestandteil einer Einrichtung 96 zum chemischen Ausfällen von Schadstoffen. Zu dieser Einrichtung 96 gehört des weiteren auch eine pH-Wert-Reguliereinrichtung 98, die erfindungsgemäß in Abhängigkeit von Istwerten der pH-Werte der in den beiden Teilbehältern 22, 24 enthaltenen Flüssigkeit den Säure-Zulauf 34 und/oder den Lauge-Zulauf 36 durch entsprechende, nicht dargestellte Ventile zum Einstellen von vorbestimmten pH-Sollwerten reguliert. Zum Erfassen der pH-Istwerte ist jeder Teilbehälter 22, 24 mit einem entsprechenden Fühler bzw. Sensor ausgestattet. Die Erfassung der Ist-Werte sowie die Wirkbetätigung der Ventile der Zuläufe 34, 36 sind in Fig. 3 durch gestrichelte Linien angedeutet.

Weiterhin ist erfindungsgemäß eine pH-Wert-Endkontrolleinrichtung 100 vorgesehen, die bei Abweichungen des Ist-Wertes des pH-Wertes der aufbereiteten, über den Überlauf 48 ablaufenden Flüssigkeit von einem vorbestimmten pH-Sollwertbereich, insbesondere 6 bis 9, oder bei Abweichungen von einem bestimmten Sollwert, insbesondere dem Neutralwert 7, eine Alarmmeldung auslöst und/oder die gesamte Vorrichtung abschaltet.

Über die Ablaufrinne 82 gelangen die als Schlamm abgeschöpften Schadstoffe (Schwimmschicht 46) in eine Entwässerungsvorrichtung 102, wie sie in Fig. 4 in einer besonders vorteilhaften Ausführungsform dargestellt ist. Diese Entwässerungsvorrichtung 102 besteht aus einem Filterbehälter 104, dessen Boden 106 und Wandungen 108 aus einem Filtermaterial 110 (in Fig. 4 durch Schraffierungen angedeutet), insbesondere einem Filtergewebe, bestehen. Zweckmäßigerweise ist eine in Fig. 4 nicht erkennbare Trag- bzw. Rahmenkonstruktion mit dem Filtermaterial 110 bezogen. Besonders vorteilhaft ist es, wenn innerhalb des Filterbehälters 104 mehrere rohr- oder schachtartige Filtereinsätze 112 in vertikaler Anordnung auf dem Boden 106 stehend angeordnet sind. Dabei sind die Wandungen dieser Filtereinsätze 112 ebenfalls aus dem Filtermaterial 110 gebildet. Der horizontale Abstand A der Filtereinsätze 112 voneinander sowie von den Wandungen 108 des Filterbehälters 104 beträgt dabei maximal 50 bis 60 cm. Dies ist insofern von Vorteil, als der abgeschöpfte Schadstoff-Schlamm einen sogenannten "Entwässerungsradius" von nur ca. 30 cm besitzt. Dies bedeutet, daß Wasser aus dem Schlamm nur über eine Entfernung von etwa 30 cm nach außen gelangen kann. Durch die Filtereinsätze 112 wird daher vorteilhafterweise erreicht, daß der Schlamm auch in großen Mengen von bis zu mehreren, z.B. 1 bis 2 Kubikmetern vollständig entwässert sowie belüftet werden kann. Zur Entleerung ist es vorteilhaft, den Filterbehälter 104 über eine Schwenklagerung 114 derart schwenkbeweglich an einer Halterung zu befestigen, daß der Behälter 104 auf einfache Weise ausgekippt werden kann.

Im folgenden soll nun noch kurz die Funktion der erfindungsgemäßen Vorrichtung bzw. der Ablauf des erfindungsgemäßen Verfahrens erläutert werden.

Die zu reinigende, mit Schadstoffen belastete Flüssigkeit, insbesondere Abwasser aus Industrieanlagen oder von Schrottplätzen, wird in einem nicht dargestellten Sammelbecken angesammelt und von hier mittels einer ebenfalls nicht dargestellten Pumpe über den Zulauf 26 in den ersten Teilbehälter 22 der Einrichtung 96 zur chemischen Behandlung befördert. Hier wird durch Zugabe insbesondere von Schwefelsäure über den Säure-Zulauf 34 der pH-Wert des Abwassers auf etwa 3 abgesenkt. Innerhalb des ersten Teilbehälters wird dabei die Flüssigkeit mit der Säure durch den Schlauch- oder Rohrlüfter 32 intensiv verwirbelt. Die Flüssigkeit gelangt dann über den Überlauf 28 in den zweiten Teilbehälter, in dem der pH-Wert durch Zugabe insbesondere von Natronlauge über den Lauge-Zulauf 36 wieder insbesondere auf 7 (neutral) angehoben wird. Die pH-Wert-Regelung erfolgt über die Reguliereinrichtung 98.

Nach dieser chemischen Vorbehandlung, durch die Schadstoffe, und zwar insbesondere Schwermetalle, als Teilchen ausgefällt werden, strömt das Abwasser durch die Öffnung 18 in die Elektrolyseeinrichtung 38 und in dieser in Richtung der Pfeile 42 vertikal von unten nach oben. Hierdurch werden auf elektrolytischem Wege Gasbläschen erzeugt, an denen sich die Schadstoff-Teilchen anlagern und so nach oben transportiert werden. Die Schadstoff-Teilchen sind in Fig. 3 durch Punkte angedeutet. Es bildet sich auf diese Weise an der Flüssigkeitsoberfläche die abschöpfbare Schwimmschicht 46.

Nachdem die Flüssigkeit oben aus der Elektrolyseeinrichtung 38 ausgetreten ist, strömt sie nachfolgend in horizontaler Richtung weiter durch den Behälter 2 in Richtung des Überlaufs 48, d.h. in Pfeilrichtung 50, wodurch die schwimmenden Schadstoff-Teilchen mitgenommen werden. Auch während dieser Strömung bewegen sich noch Schadstoff-Teilchen vertikal nach oben, so daß in diesem Bereich eine Flotationsphase stattfindet, die vorzugsweise mindestens eine halbe Stunde dauert. Diese Flotationsphase ist abgeschlossen, wenn die Schwimmschicht 46 in den Bereich der Abschöpfeinrichtung 44 gelangt. Hier wird die Schwimmschicht 46 (Flotatschlamm) mit dem kontinuierlich umlaufenden Abstreifer 80 in die Ablaufrinne 82 von der Flüssigkeitsoberfläche abgestreift bzw. abgeschöpft. Das so gereinigte Abwasser gelangt unter der Tauchwand 90 hindurch und über den Überlauf 48 in einen Abwasserkanal oder zu einer Wiederverwendung. Im Bereich des Überlaufs 48 erfolgt noch eine pH-Wert-Endkontrolle über die Einrichtung 100, die den jeweiligen pH-Istwert erfaßt und bei Abweichungen von einem Sollwert, insbesondere dem Neutralwert 7, oder von einem Sollwertbereich, insbesondere 6 bis 9, eine Alarmmeldung auslöst und/oder die gesamte Vorrichtung abschaltet. Hierdurch wird verhindert, daß ein Abwasser mit einem falschen pH-Wert in die Kanalisation oder zur Wiederverwendung gelangt.

Der abgeschöpfte Schadstoffschlamm wird nachfolgend in die Entwässerungsvorrichtung 102 (siehe Fig. 4) eingefüllt. Hier wird durch das Filtermaterial 110 hindurch eine weitgehende Entwässerung des Schlammes erreicht. Je nach Dauer der Lagerung kann eine nahezu vollständige Austrocknung erreicht werden. Es entsteht hierdurch eine Trockensubstanz, die aufgrund ihrer Schwermetall- und Kohlenwasserstoff-Anteile zweckmäßigerweise in einer Sondermüll-Verbrennungsanlage verbrannt wird. Das aus dem Filterbehälter 104 bzw. der Entwässerungsvorrichtung 102 abgetropfte Wasser wird vorzugsweise erneut dem ersten Teilbehälter 22 zugeführt.

## Patentansprüche

1. Verfahren zum Aufbereiten von verunreinigten Flüssigkeiten, insbesondere von Abwasser, welches gelöste und ungelöste Schadstoffe, wie Öle, Fette, Schwermetalle, Kohlenwasserstoffe und dergleichen, enthalten kann, wobei
1.1 zunächst eine chemische Vorbehandlung der Flüssigkeit zum Bilden von Schadstoffteilchen durch Ausfällen der gelösten Schadstoffe durchgeführt wird, indem der pH-Wert der Flüssigkeit
1.1.1 zunächst durch Zugabe einer Säure abgesenkt und anschließend durch Zugabe einer Lauge wieder angehoben wird; oder
1.1.2 zunächst durch Zugabe einer Lauge angehoben und anschließend durch Zugabe einer Säure wieder abgesenkt wird;
1.2 anschließend an die Vorbehandlung eine Elektrolysebehandlung derart durchgeführt wird,
1.2.1 daß in der Flüssigkeit nach oben aufsteigende Gasbläschen erzeugt werden, die die in der Flüssigkeit vorhandenen bzw. ausgefällten Schadstoffteilchen durch Anlagerung mitnehmen,
1.2.2 und die Flüssigkeit für die Dauer der Elektrolysebehandlung in eine kontinuierliche, vertikal von unten nach oben in Auftriebsrichtung der Gasbläschen verlaufende Strömung versetzt wird;
1.3 die Flüssigkeit im Anschluß an die Elektrolysebehandlung unter Beibehaltung der kontinuierlichen Strömung von dem vertikalen Strömungsverlauf derart in einen horizontalen Strömungsverlauf gebracht wird, daß in einer Flotationsphase
1.3.1 die vorhandenen Schadstoffteilchen nach oben aufsteigen und eine Schwimmschicht bilden und
1.3.2 die Schwimmschicht in horizontaler Richtung von der Strömung mitgenommen wird;
1.4 sowie die Schwimmschicht abgeschöpft wird.

2. Verfahren nach Anspruch 1,
**dadurch gekennzeichnet**, daß die Strömungsgeschwindigkeit in der vertikalen Strömung der Flüssigkeit derart gering vorgegeben wird, daß während der Elektrolysebehandlung eine im wesentlichen homogene, verwirbelungsfreie Strömung vorhanden ist.

3. Verfahren nach Anspruch 1 oder 2,
**dadurch gekennzeichnet**, daß die Strömungsgeschwindigkeit in der horizontalen Strömung der Flüssigkeit derart gering vorgegeben wird, daß während der Flotationsphase eine zumindest in einem Grenzbereich zwischen der Flüssigkeit und der Schadstoff-Schwimmschicht im wesentlichen homogene, verwirbelungsfreie Strömung vorhanden ist und die Verweildauer der Flüssigkeit in der Flotationsphase vorzugsweise mindestens 0,5 h beträgt.

4. Verfahren nach einem der Ansprüche 1 bis 3,
**dadurch gekennzeichnet**, daß das Abschöpfen der Schadstoff-Schwimmschicht im Anschluß an die Flotationsphase im wesentlichen verwirbelungsfrei erfolgt.

5. Verfahren nach einem der Ansprüche 1 bis 4,
**dadurch gekennzeichnet,** daß die abgeschöpfte Schadstoffschicht drucklos entwässert sowie anschließend entsorgt wird.

6. Verfahren nach einem der Ansprüche 1 bis 5,
**dadurch gekennzeichnet**, daß bei der chemischen Vorbehandlung der Flüssigkeit zunächst zur pH-Wert-Absenkung Schwefelsäure und anschließend zur pH-Wert-Anhebung Natronlauge zugegeben wird.

7. Verfahren nach einem der Ansprüche 1 bis 6,
**dadurch gekennzeichnet**, daß bei der chemischen Vorbehandlung der pH-Wert zunächst auf ca. 3 abgesenkt und dann wieder auf ca. 7 angehoben wird.

8. Verfahren nach einem der Ansprüche 1 bis 7,
**dadurch gekennzeichnet**, daß die Flüssigkeit während der chemischen Vorbehandlung durch Säure- und Laugen-Zugabe jeweils insbesondere durch Luftzuführung verwirbelt wird.

9. Verfahren nach einem der Ansprüche 4 bis 8,
**dadurch gekennzeichnet**, daß die beim Entwässern erhaltene Flüssigkeit erneut der Elektrolysebehandlung oder auch der vorausgehenden chemischen Vorbehandlung zugeführt wird.

10. Vorrichtung zur Durchführung des Verfahrens nach einem der Ansprüche 1 bis 9 zum Aufbereiten von verunreinigten Flüssigkeiten, mit einem Behälter (2) für die Flüssigkeit sowie einer von der Flüssigkeit durchströmten Elektrolyseeinrichtung (38) mit einer Anoden-/Kathoden-Anordnung (54), wobei die Elektrolyseeinrichtung (38) derart innerhalb des Behälters (2) angeordnet ist, daß die durch eine Zulauföffnung (18) einströmende Flüssigkeit die Elektrolyseeinrichtung (38) vertikal von unten nach oben durchströmt,
**dadurch gekennzeichnet**, daß der Behälter (2) eine wannenartige Form aufweist, wobei die Zulauföffnung (18) und die Elektrolyseeinrichtung (38) an einem Ende des wannenartigen Behälters (2) und am anderen Ende eine Abschöpfeinrichtung (44) für eine sich abscheidende Schadstoff-Schwimmschicht (46) sowie ein Überlauf (48) für die aufbereitete Flüssigkeit angeordnet sind, so daß die kontinuierlich über die Zulauföffnung (18) zugeführte und aus der Elektrolyseeinrichtung (38) ausströmende Flüssigkeit horizontal in Richtung der Abschöpfeinrichtung (44) und des Überlaufs (48) strömt, und daß dem Behälter (2) bzw. der Elektrolyseeinrichtung (38) eine Einrichtung (96) zum chemischen Ausfällen von Schadstoffen vorgeordnet ist, die zwei Teilbehälter (22, 24) aufweist, wobei entweder der erste Teilbehälter (22) einen Säure-Zulauf (34) und der zweite Teilbehälter (24) einen Lauge-Zulauf (36) oder der erste Teilbehälter (22) einen Lauge-Zulauf und der zweite Teilbehälter (24) einen Säure-Zulauf besitzen.

11. Vorrichtung nach Anspruch 10,
**dadurch gekennzeichnet**, daß der erste Teilbehälter (22) einen Zulauf (26) für die aufzubereitende Flüssigkeit aufweist und mit dem zweiten Teilbehälter (24) über einen Überlauf (28) verbunden ist, wobei der zweite Teilbehälter (24) in seinem unteren Bereich eine vorzugwsweise unmittelbar in die Zulauföffnung (18) des Behälters (2) übergehende Ablauföffnung aufweist.

12. Vorrichtung nach Anspurch 10 oder 11,
**dadurch gekennzeichnet**, daß die Elektrolyseeinrichtung (38) aus mindestens einer lösbar in dem Behälter (2) gehalterten Elektrolyseeinheit (38a, b) besteht, die eine gehäuseartige Halterung (52) für die Anoden-/Kathoden-Anordnung (54) aufweist, wobei die Elektrolyseeinheit (38a,b) in ihrem unteren Bereich eine mit der Behälter-Zulauföffnung (18) verbundene Eintrittsöffnung (70) für die Flüssigkeit aufweist und in ihrem oberen Bereich zum Austritt der Flüssigkeit vorzugsweise vollständig offen ist.

13. Vorrichtung nach Anspruch 10 bis 12,
**dadurch gekennzeichnet**, daß die Anoden-/Kathoden-Anordnung (54) aus einer plattenförmigen, in einer vertikalen Ebene liegenden, insbesondere aus Stahl bestehenden Kathode (62) und einer von einer Vielzahl von zueinander parallel sowie in vertikalen, zu der Kathode (62) senkrechten Ebenen liegenden, insbesondere aus Aluminium bestehenden Platten (68) gebildeten Anode (66) besteht, wobei die Eintrittsöffnung (70) schlitzförmig ausgebildet und im zwischen der Kathode (62) und der Anode (66) liegenden Bereich angeordnet ist.

14. Vorrichtung nach Anspruch 13,
**dadurch gekennzeichnet**, daß beidseitig der vorzugsweise aus zwei einzelnen, an einer vertikalen Haltewandung (60) gehalterten Platten (64) bestehenden Kathode (62) jeweils eine Anode (66) angeordnet ist, wobei die Elektrolyseeinheit (38a, b) zwei parallele, schlitzförmige Eintrittsöffnungen (70) aufweist.

15. Vorrichtung nach Anspruch 13 oder 14,
**dadurch gekennzeichnet**, daß die Anode (66) zum Verstellen des Elektrodenabstandes relativ zu der Kathode (62) verstellbar in der Halterung (52) gehaltert ist.

16. Vorrichtung nach einem der Ansprüche 10 bis 15,
**dadurch gekennzeichnet**, daß die Abschöpfeinrichtung (44) mindestens einen oberhalb des Behälters (2) quer zur Behälter-Längserstreckung angeordneten und vertikal in die Schwimmschicht (46) sowie vorzugsweise geringfügig in die darunter angeordnete Flüssigkeit eintauchenden Abstreifer (80) aufweist, der insbesondere motorisch in Richtung einer dem Flüssigkeits-Überlauf (48) vorgeordneten Ablaufrinne (82) für die Schwimmschicht (46) beweglich geführt ist.

17. Vorrichtung nach einem der Ansprüche 10 bis 16,
**dadurch gekennzeichnet**, daß der Behälter (2) einen Boden (4) und zwei Seitenwände (6, 8) aufweist, wobei sich zwischen den Seitenwänden (6, 8) im Bereich zwischen der Elektrolyseeinrichtung (38) und der Ablaufrinne (82) jeweils vom Boden (4) und von der Oberkante der Seitenwände (6,8) beabstandete Querwände (92) erstrecken, und wobei der Boden (4) vorzugsweise in mehrere, in unterschiedlichen Richtungen ein Gefälle zur Horizontalen aufweisende Abschnitte unterteilt ist und der Behälter (2) jeweils an den tiefsten Stellen des Bodens (4) Ablaufventile (94) aufweist.

18. Vorrichtung nach einem der Ansprüche 11 bis 17,
**gekennzeichnet durch** eine pH-Wert-Reguliereinrichtung (98), die in Abhängigkeit von Istwerten der pH-Werte der in den beiden Teilbehältern (22, 24) enthaltenen Flüssigkeit den Säure-Zulauf (34) und/oder den Lauge-Zulauf (36) zum Einstellen von vorbestimmten pH-Sollwerten reguliert.

19. Vorrichtung nach einem der Ansprüche 11 bis 18,
**dadurch gekennzeichnet**, daß jeder Teilbehälter (22, 24) eine insbesondere als Schlauch- oder Rohrlüfter (32) ausgebildete Mischeinrichtung aufweist.

20. Vorrichtung nach einem der Ansprüche 10 bis 19,
**gekennzeichnet durch** eine pH-Wert-Endkontrolleinrichtung (100), die bei Abweichungen des Istwertes des pH-Wertes der aufbereiteten Flüssigkeit von einem vorbestimmten pH-Sollwert oder einem Sollwertbereich eine Alarmmeldung auslöst und/oder die Vorrichtung abschaltet.

21. Vorrichtung nach einem der Ansprüche 10 bis 20,
**gekennzeichnet durch** eine Entwässerungsvorrichtung (102) zur Aufnahme der abgeschöpften Schadstoffe (46), bestehend aus einem Filterbehälter (104), dessen Boden (106) und Wandungen (108) aus einem Filtermaterial (110) bestehen.

22. Vorrichtung nach Anspruch 21,
**dadurch gekennzeichnet**, daß innerhalb des Filterbehälters (104) mehrere rohr- oder schachtartige, Wandungen aus Filtermaterial (110) aufweisende Filtereinsätze (112) in vertikaler Anordnung auf dem Boden (106) stehend angeordnet sind, wobei der horizontale Abstand der Filtereinsätze (112) voneinander sowie von den Wandungen (108) des Filterbehälters (104) maximal ca. 50 bis 60 cm beträgt.

## Claims

1. A process for treating contaminated liquids especially effluents, which may contain dissolved and undissolved pollutants such as oils, fats, heavy metals, hydrocarbons and the like, wherein,
1.1 chemical pretreatment of the liquid is first performed in order to produce pollutant particles by precipitating the dissolved pollutants by
1.1.1 first lowering the pH by adding an acid and then raising it again by adding an alkaline solution; or
1.1.2 first raising the pH by adding an alkaline solution and then lowering it again by adding an acid;
1.2 electrolytic treatment is performed after chemical pretreatment, such that
1.2.1 upwardly rising gas bubbles are produced in the liquid which carry with them the pollutant particles which have been precipitated or are present in the liquid by adhering to the pollutants,
1.2.2 and, for the duration of electrolytic treatment, the liquid flows in a continuous current, vertically from bottom to top in the direction of the buoyant gas bubbles;
1.3 the direction of flow of liquid, following electrolytic treatment and while retaining a continuous flow, is changed from vertical to horizontal so that in a flotation phase
1.3.1 the pollutant particles present rise upwards and form a surface mat and
1.3.2 the surface mat is carried in a horizontal direction by the flow;
1.4 and the surface mat is skimmed off.

2. A process according to Claim 1,
characterised in that the rate of flow in the vertical current of liquid is preset to be low enough for essentially homogeneous, non-turbulent flow to take place during electrolytic treatment.

3. A process according to Claim 1 or 2,
characterised in that the rate of flow in the horizontal current is preset to be low enough for, at least in a boundary layer between the liquid and the surface mat, essentially homogeneous, non-turbulent flow to take place during the flotation phase and for the residence time of the liquid in the flotation phase to be preferably at least 0.5 h.

4. A process according to one of Claims 1 to 3,
characterised in that the pollutant surface mat is skimmed off after the flotation phase in an essentially non-turbulent manner.

5. A process according to one of Claims 1 to 4
characterised in that the skimmed off pollutant layer is dewatered without the use of pressure and is then disposed of.

6. A process according to one of Claims 1 to 5,
characterised in that, during chemical pretreatment of the liquid, sulphuric acid is first added to lower the pH and then caustic soda solution is added to raise the pH.

7. A process according to one of Claims 1 to 6,
characterised in that, during chemical pretreatment, the pH is first lowered to ca. 3 and then raised again to ca. 7.

8. A process according to one of Claims 1 to 7,
characterised in that, during chemical pretreatment, the liquid is swirled due to the addition of acidic and alkaline liquors respectively and in particular by the introduction of air.

9. A process according to one of Claims 4 to 8,
characterised in that the liquid obtained during dewatering is returned to the electrolytic treatment stage or perhaps to the preceding chemical pretreatment stage.

10. A device for performing the process according to one of Claims 1 to 9 for treating contaminated liquids with a container (2) for the liquid and an electrolysis device (38), through which the liquid flows, with an anode/cathode arrangement (54), wherein the electrolysis device (38) is located inside container (2) so that liquid flowing in through an inlet opening (18) flows vertically through the electrolysis device (38) from the bottom to the top, characterised in that container (2) has a trough-like shape, wherein the inlet opening (18) and the electrolysis device (38) are located at one end of trough-like container (2) and at the other end is located a skimming off device (44) for the surface mat (46) of pollutants being separated and an overflow (48) for treated liquid, so that the liquid being continuously supplied via inlet opening (18) and flowing out of electrolysis device (38) flows horizontally in the direction of the skimming off device (44) and overflow (48), and that, in front of container (2) and electrolysis device (38), there is device (96) for chemically precipitating pollutants, which has two part-containers (22,24), wherein either the first part-container (22) has an acidic liquor feed (34) and the second part-container (24) has an alkaline liquor feed (36) or the first part-container (22) has an alkaline liquor feed and the second part-container (24) has an acidic liquor feed.

11. A device according to Claim 10,
characterised in that the first part-container (22) has an inlet (26) for the liquid being treated and is connected to the second part-container (24) by an overflow (28), wherein the second part-container (24) has a exit opening at its lower end, preferably passing directly into the inlet opening (18) of container (2).

12. A device according to Claim 10 or 11,
characterised in that the electrolysis device (38) comprises at least one electrolysis unit (38a,b) detachably held in container (2), which has a housing-like mounting (52) for the anode/cathode arrangement (54), wherein the electrolysis unit (38a,b) has an inlet opening (70) at its lower end for liquid, preferably connected to container feed opening (18) and is preferably completely open at its upper end to discharge the liquid.

13. A device according to Claims 10 to 12,
characterised in that the anode/cathode arrangement (54) comprises a plate-shaped cathode (62), preferably consisting of steel, lying in a vertical plane and an anode (66) consisting of a number of plates (68) which are parallel to each other and lie in a vertical plane at right angles to the cathode (62), wherein the inlet opening (70) is designed in the shape of a slit and is located in the region lying between the cathode (62) and the anode (66).

14. A device according to Claim 13,
characterised in that one anode (66) is arranged on each side of a cathode (62) consisting of two separate plates (64) mounted on a vertical retaining wall (60), wherein the electrolysis unit (38a,b) has two parallel slit-shaped inlet openings (70).

15. A device according to Claim 13 or 14,
characterised in that the anode (66) is adjustably retained in a mounting (52) in order to adjust the electrode spacing relative to the cathode (62).

16. A device according to one of Claims 10 to 15,
characterised in that the skimming off device (44) has at least one scraper (80) located above container (2), transverse to the longitudinal dimension of the container and dipping vertically into the surface mat (46), and preferably slightly into the liquid located thereunder, which is moved, in particular by means of a motor, in the direction of a run-off channel (82) for the surface mat, located in front of the liquid overflow (48).

17. A device according to one of Claims 10 to 16,
characterised in that the container (2) has a base (4) and two side walls (6,8), wherein transverse walls (92) extend between the side walls (6,8) in the region between the electrolysis device (38) and the run-off channel (82), each projecting from the upper edge of the side walls (6,8), and wherein the base (4) is divided into preferably several sections having an incline to the horizontal in different directions, and the container (2) has discharge valves (94) at each of the deepest sites on the base.

18. A device according to one of Claims 11 to 17,
characterised by pH regulating device (98) which regulates the acid feed (34) and/or the alkaline feed (36) to adjust predetermined set pH values, depending on the actual pH of the liquid contained in the two part-containers (22, 24).

19. A device according to one of Claims 11 to 18,
characterised in that each part-container (22,24) has a mixing device, in particular one designed as a hose or pipe aerator (32).

20. A device according to one of Claims 10 to 19,
characterised by a final pH inspection device (100) which triggers an alarm and/or switches off the device when the actual pH of the treated liquid differs from a predetermined set pH or a set pH range.

21. A device according to one of Claims 10 to 20,
characterised by a dewatering device (102) for collecting the skimmed-off pollutants (46), comprising a filter container (104), whose base (106) and walls (108) consist of a filter material (110).

22. A device according to Claim 21
characterised in that several tubular or shaft-like filter units (112) with walls made of filter material (110) stand in a vertical position on the base (106), wherein the horizontal spacing between the filter units (112) and between the filter units and the walls (108) of the filter container (104) is a maximum of ca. 50 to 60 cm.

## Revendications

1. Procédé de traitement de liquides
pollués, en particulier d'eaux usées pouvant contenir des substances nocives dissoutes ou non dissoutes tel que huiles, graisses, métaux lourds, hydrocarbures et analogues, dans lequel :
1.1 on effectue d'abord un pré-traitement chimique du liquide pour former des particules de substances nocives par précipitation des substances nocives dissoutes en
1.1.1 abaissant d'abord la valeur pH du liquide en ajoutant un acide et en la relevant ensuite en ajoutant une substance alcaline, ou en
1.1.2 élevant d'abord la valeur pH du liquide en ajoutant une substance alcaline et en l'abaissant ensuite de nouveau en ajoutant un acide ;
1.2 on effectue, après le pré-traitement, un traitement par électrolyse, de manière à
1.2.1 engendrer des bulles gazeuses qui montent dans le liquide et entraînent par fixation les substances nocives présentes dans le liquide ou ayant précipité ;
1.2.2 à créer dans le liquide, pendant la durée du traitement par électrolyse, un courant continu vertical, de bas en haut dans le sens de montée des bulles de gaz ;
1.3 suite au traitement par électrolyse, on dévie le courant de liquide, tout en maintenant un courant continu, de la direction verticale dans la direction horizontale, de manière à ce que, dans une phase de flottage :
1.3.1 les particules présentes de substances nocives montent et forment une couche flottante,
1.3.2 et la couche flottante soit entraînée par le courant dans la direction horizontale,
1.4 on ôte la couche flottante.

2. Procédé selon la revendication 1,
cartactérisé en ce que la vitesse du courant vertical du liquide est choisie suffisamment faible pour qu'il existe un courant sensiblement homogène et sans tourbillons pendant le traitement par électrolyse.

3. Procédé selon la revendication 1 ou 2,
caractérisé en ce que la vitesse du courant horizontal du liquide est choisie suffisamment faible pour que, au cours de la phase de flottation, il existe un courant sensiblement homogène et sans tourbillons au moins dans une zone limite entre le liquide et la couche flottante de substances nocives et que le temps de maintien du liquide dans la phase de flottation soit de préférence au moins de 0,5 heure.

4. Procédé selon l'une des revendications 1 à 3,
caractérisé en ce que l'enlèvement de la couche flottante de substances nocives, suite à la phase de flottation, est effectué sensiblement sans tourbillons.

5. Procédé selon l'une des revendications 1 à 4,
caractérisé en ce que la couche flottante de substances novices est déshydratée en l'absence de pression et est ensuite rendue inoffensive.

6. Procédé selon l'une des revendications 1 à 5,
caractérisé en ce que, lors du pré-traitement chimique du liquide, on ajoute d'abord de l'acide sulfurique pour abaisser la valeur pH et ensuite de l'hydroxyde de sodium pour élever la valeur pH.

7. Procédé selon l'une des revendications 1 à 6,
caractérisé en ce que, lors du pré-traitement chimique, on abaisse d'abord la valeur pH à environ 3 et on la relève ensuite à environ 7.

8. Procédé selon l'une des revendications 1 à 7,
caractérisé en ce que, au cours du pré-traitement chimique, on crée des tourbillons dans le liquide par l'adjonction d'un acide ou d'une substance alcaline et en particulier par introduction d'air.

9. Procédé selon l'une des revendications 4 à 8,
caractérisé en ce que le liquide obtenu lors de la déshydratation est soumis à nouveau à un traitement par électrolyse ou également à un pré-traitement chimique.

10. Dispositif pour la mise en oeuvre du procédé de traitement de liquides pollués selon l'une des revendications 1 à 9, comportant un récipient (2) pour le liquide, ainsi qu'un dispositif d'éleectrolyse (38) traversé par le liquide, avec un agencement à anode/cathode (54), le dispositif d'électrolyse (38) étant disposé dans le récipient (2) de manière à ce que le liquide, qui entre par une ouverture d'admission (18), traverse le dispositif d'électrolyse verticalement de bas en haut,
caractérisé en ce que le récipient (2) a la forme d'un bac, l'ouverture d'admission (18) et le dispositif d'électrolyse (38) étant disposés à une extrémité du récipient (2) en forme de bac et, à l'autre extrémité, un dispositif (44) d'enlèvement d'une couche flottante de substances nocives (46) qui se détache, ainsi qu'un trop-plein (48) pour le liquide traité, de manière à ce que le liquide qui est introduit en continu par l'ouverture d'admission (18) et qui sort du dispositif d'électrolyse (38) s'écoule horizontalement dans la direction du dispositif d'enlèvement (44) et du trop-plein (48),
et en ce qu'un dispositif (96) pour la précipitation chimique de substances nocives est disposé en amont du récipient (2) ou du dispositif d'électrolyse (38), ce dispositif (96) présentant deux récipients partiels (22, 24) le premier récipient partiel (22) étant équipé d'une conduite d'alimentation en acide (34) et le deuxième récipient partiel (24), d'une conduite d'alimentation en substance alcaline (36), ou bien le premier récipient partiel (22) est équipé d'une conduite d'alimentation en substance alcaline et le deuxième récipient partiel (24) d'une conduite d'alimentation en acide.

11. Dispositif selon la revendication 10,
caractérisé en ce que le premier récipient partiel (22) présente une conduite (26) d'alimentation en liquide à traiter et est relié au deuxième récipient partiel (24) par un trop-plein (28), le deuxième récipient partiel (24) présentant dans la région inférieure une ouverture d'évacuation débouchant de préférence directement dans l'ouverture d'admisssion (18) du récipient (2).

12. Dispositif selon la revendication 10 ou 11,
caractérisé en ce que le dispositif d'électrolyse (38) comporte au moins un groupe d'électrolyse (38a, 38b) maintenu de manière amovible dans le récipient (2), ce groupe présentant un support en forme de boîtier (52) pour l'agencement anode/cathode (54), le groupe d'électrolyse (38a, b) comportant dans sa région inférieure une ouverture d'admission (70) du liquide, reliée à l'ouverture d'admission (18) du récipient, le groupe étant de préférence totalement ouvert dans sa région supérieure pour permettre la sortie du liquide.

13. Dispositif selon la revendication 10 à 12,
caractérisé en ce que l'agencement anode/cathode (54) comporte une cathode (62), de préférence en acier, en forme de plaque, disposée dans un plan vertical et une anode (66) constituée par une pluralité de plaques (68), de préférence en aluminium, parallèles entre elles et disposées dans des plans verticaux perpendiculaires à la cathode (62), l'ouverture d'entrée (70) ayant la forme d'une fente et étant disposée dans la région entre la cathode (62) et l'anode (66).

14. Dispositif selon la revendication 13,
caractérisé en ce que, de part et d'autre de la cathode (62), formée de préférence de deux plaques individuelles (64) fixées sur une paroi verticale (60), est disposée respectivement une anode (66), le groupe d'électrolyse (38a, b) présentant deux ouvertures d'entrée (70) parallèles en forme de fentes.

15. Dispositif selon la revendication 13 ou 14,
caractérisé en ce que l'anode (66) est disposée de manière réglable dans le support (52) pour permettre le réglage de la distance des électrodes par rapport à la cathode (62).

16. Dispositif selon l'une des revendications 10 à 15,
caractérisé en ce que le dispositif d'enlèvement (44) présente au moins une racle (80) disposée au-dessus du récipient (2), transversalement à l'étendue longitudinale du récipient et plongeant verticalement dans la couche flottante (46) et, de préférence, légèrement dans le liquide en dessous, cette racle étant guidée en particulier par une force motrice de manière mobile dans la direction d'une goulotte d'évacuation (82) de la couche flottante disposée en amont du trop-plein de liquide (48).

17. Dispositif selon l'une des revendications 10 à 16,
caractérisé en ce que le récipient (2) présente un fond (4) et deux parois latérales (6, 8), des parois transversales (92) s'étendant entre les parois latérales (6, 8) dans la région entre le dispositif d'électrolyse (38) et la goulotte d'évacuation (82), ces parois transversales étant prévues à une certaine distance du fond (4) et du bord supérieur des parois latérales (6, 8), le fond (4) étant de préférence partagé en plusieurs sections inclinées dans différentes directions par rapport à l'horizontale et le récipient (2) présentant, aux points les plus bas du fond (4), des soupapes d'évacuation (94).

18. Dispositif selon l'une des revendications 11 à 17,
caractérisé par un dispositif de réglage de la valeur pH (98) qui règle l'admission d'acide (34) et/ou l'admission d'une substance alcaline (36) pour obtenir des valeurs pH de référence prédéterminées à partir des valeurs effectives pH du liquide contenu dans les deux récipients partiels (22, 24).

19. Dispositif selon l'une des revendications 11 à 18,
caractérisé en ce que chaque récipient partiel (22, 24) comporte un dispositif mélangeur ayant en particulier la forme d'un aérateur tubulaire ou à tuyau flexible (32).

20. Dispositif selon l'une des revendications 10 à 19,
caractérisé par un dispositif de contrôle de la valeur pH (100) qui, lorsque la valeur pH effective du liquide traité s'écarte d'une valeur pH de référence déterminée ou d'une fourchette de valeurs de référence, déclenche une alarme et/ou arrête le dispositif.

21. Dispositif selon l'une des revendications 10 à 20,
caractérisé par un dispositif de déshydratation (102) qui accueille les substances nocives (46) enlevées et comporte un récipient filtrant (104) dont le fond (106) et les parois (108) sont en une matière filtrante (110).

22. Dispositif selon la revendication 21,
caractérisé en ce qu'à l'intérieur du récipient filtrant (104), plusieurs inserts filtrants (112) auant des parois tubulaires ou en forme de puits en une matière filtrante (110), sont disposés verticalement debout sur le fond (106), l'écart horizontal entre les inserts filtrants (112), ainsi que par rapport aux parois (108) du récipient filtrant (104) étant au maximum de 50 à 60 cm environ.
